# FASCICULE DE BREVET EUROPEEN

(11) **EP 3 300 540 B1**
(45) Date de publication et mention de la délivrance du brevet: **04.03.2020**
(21) Numéro de dépôt: 17727641.7
(22) Date de dépôt: 09.05.2017
(51) Int. Cl.: H02H 3/32, H02H 3/33

(54) **DISPOSITIF DE PROTECTION DIFFÉRENTIEL INTÉGRANT UN MOYEN D'ISOLATION DU RELAIS OU ANALOGUE**
DIFFERENTIALSCHUTZVORRICHTUNG MIT MITTELN ZUM ISOLIEREN EINES RELAIS ODER ANALOGA
DIFFERENTIAL PROTECTING DEVICE INCORPORATING A MEANS FOR ISOLATING A RELAY OR ANALOGOUS

(30) Priorité: 13.05.2016 FR 1654281
(43) Date de publication de la demande: 04.04.2018
(73) Titulaire: HAGER-ELECTRO SAS, 67210 Obernai (FR)
(72) Inventeur: CHETOUANI, Hichem, 67380 LINGOLSHEIM (FR)
(74) Mandataire: Nuss, Laurent
(86) Numéro de dépôt international: PCT/FR2017/051099
(87) Numéro de publication internationale: WO 2017/194867

(56) Documents cités:
- EP-A1- 2 822 126
- CN-U- 201 556 935
- FR-A1- 2 643 195
- FR-A1- 2 992 093

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentiel intégrant un moyen d'isolation du relais ou analogue.

Ce type de dispositif de protection est couramment intégré dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée : les conducteurs du circuit à protéger, ou les conducteurs de la ligne d'alimentation de ce circuit, passent dans un tore de matériau ferromagnétique d'un transformateur dont les conducteurs précités forment le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, cette dernière étant utilisée pour commander directement, ou à travers une électronique dédiée (étages de traitement des signaux), un organe de coupure ou d'ouverture, notamment un actionneur (par exemple de type relais). Ce dernier actionne à son tour un mécanisme de déclenchement, de coupure ou d'ouverture associé, ou ceux d'autres appareils de protection de l'installation.

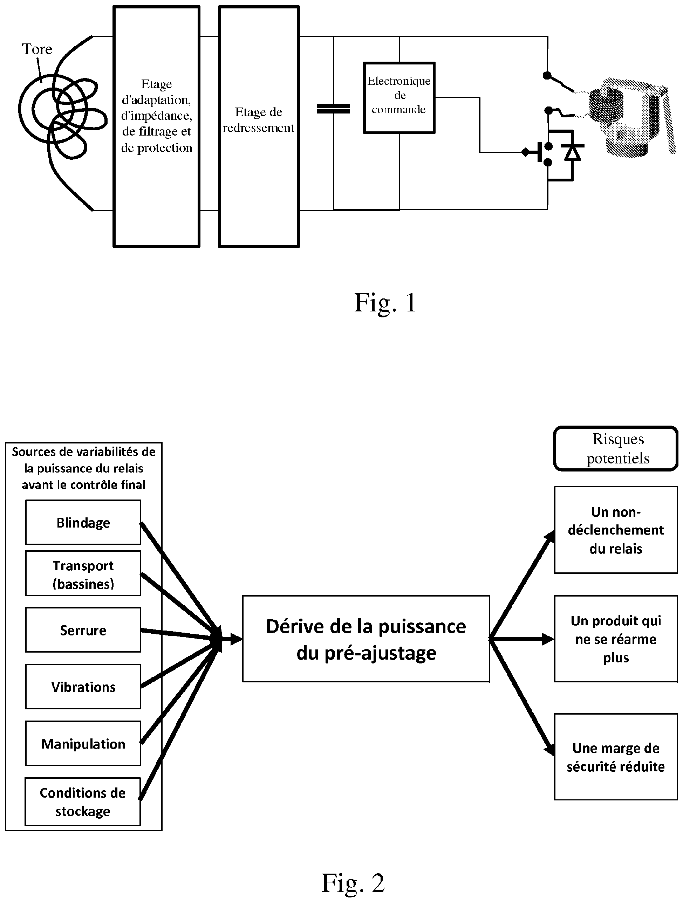

La figure 1 illustre schématiquement un dispositif de protection différentielle avec un ensemble de moyens fonctionnels électrotechniques et électroniques assurant les fonctions mesure différentielle et commande et un moyen de coupure ou d'ouverture sous forme de relais électromagnétique relié à la sortie de l'ensemble précité.

Ces appareils ou dispositifs électriques de protection différentielle peuvent présenter des caractéristiques variables. Ainsi, ils sont différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) alors que d'autres, plus complets, offrent des solutions également applicables au courant continu pulsé (types A et F) et lissé (type B).

Les dispositifs visés dans le cadre de la présente demande concernent plus particulièrement ceux dits "voltage indépendant" (non dépendant de la présence d'une tension d'alimentation) et à fonction mesure retardée ou temporisée.

Un paramètre essentiel et critique de ce type de dispositifs est le seuil de puissance de l'organe de coupure ou d'ouverture, en particulier dans les dispositifs différentiels comportant une technologie de mesure à assistance électronique, reposant sur la charge d'une capacité pour réaliser le déclenchement sélectif dudit organe (voir figure 1 à titre d'exemple).

Actuellement, ledit organe de coupure ou d'ouverture est soumis, très tôt dans le processus de fabrication du dispositif final, à un pré-ajustage de sa puissance d'ouverture ou de coupure. De plus, au niveau de sa chaîne de déclenchement, les moyens intervenant dans la commande dudit organe sont dimensionnés avec une marge suffisante pour pouvoir garantir son fonctionnement dans une plage de fonctionnement spécifiée, ce tout au long de sa durée de vie.

La manière de procéder actuelle, qui consiste à mettre en place un relais préajusté dans le produit (dispositif différentiel opérationnel intégrant le relais) avant le contrôle final dudit produit, est pratique mais présente des limites.

En effet, une des problématiques auxquelles sont confrontés les concepteurs et fabricants de ce type de produits et de dispositifs différentiels est celle de leur optimisation en termes de compacité et de coûts.

Or, la manière de procéder actuelle ne peut aboutir à une telle optimisation car elle requiert, pour être viable et pour fournir un niveau de garantie de déclenchement suffisant, un surdimensionnement du ou des composants stockant l'énergie, ce pour pouvoir fournir une puissance d'ouverture du relais nettement supérieure à la valeur de puissance d'ouverture pré-ajustée. Cette marge de sécurité constructive importante est obligatoire pour absorber les effets des potentielles différentes sources de variabilité et de dérive de cette puissance d'ouverture préajustée.

Plus précisément, entre l'opération de pré-ajustage de l'organe de coupure ou d'ouverture et sa mise en place définitive dans le boîtier du dispositif de protection différentielle, de nombreuses causes potentielles susceptibles de provoquer une dérive de sa puissance d'ouverture peuvent apparaître.

La figure 2 illustre de manière schématique et synthétique les principaux facteurs et causes possibles de variabilité ou de dérive de la valeur de la puissance de déclenchement du moyen d'ouverture ou de coupure, entre son réglage lors du pré-ajustage et le contrôle final du produit, après intégration et branchement dudit moyen dans le dispositif de protection.

En outre, lors du contrôle final et compte tenu de l'environnement de montage et de connexion dudit moyen dans le dispositif, il n'est actuellement pas possible de garantir que la puissance d'ouverture dudit moyen n'a pas variée, de déterminer l'amplitude de la dérive le cas échéant, ni a fortiori d'assurer qu'il fonctionnera dans sa plage de fonctionnement requise.

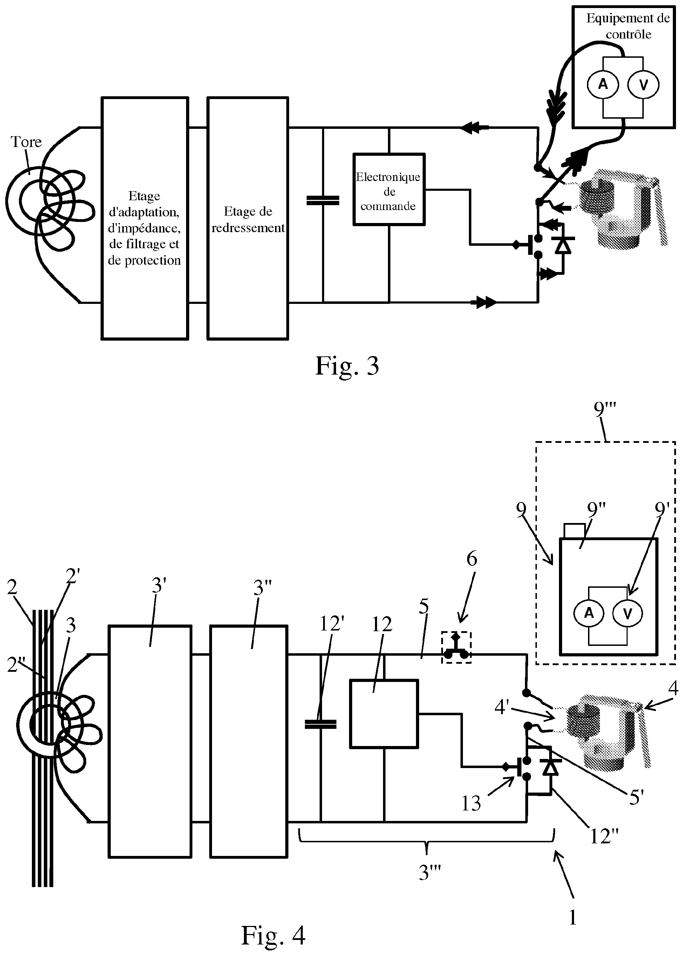

En effet, l'équipement ou l'appareil de contrôle est connecté aux bornes du moyen de coupure ou d'ouverture à tester (comme le montre la figure 3 pour un dispositif du type représenté figure 1) et délivre un courant de mesure pour déterminer, vérifier et éventuellement permettre d'ajuster la puissance de déclenchement dudit moyen.

Toutefois, compte tenu de sa connexion à l'ensemble fonctionnel de mesure différentielle et de commande, une partie seulement du courant de mesure (noté ">>>" sur la figure 3) est effectivement délivré au moyen de coupure ou d'ouverture (le courant traversant ledit moyen est noté ">" sur la figure 3), un courant de fuite étant dérivé et circulant à travers l'ensemble fonctionnel ou au moins certaines de ses composantes (courant de fuite noté ">>" sur la figure 3).

Le document EP 2 822 126 A1 montre déjà les caractéristiques du préambule de la revendication 1, dans un tout autre objectif que celui de la présente invention évoqué ci-après.

Aussi, dans le contexte précité, le problème posé consiste à surmonter au moins les principales limitations précitées et à rendre possible un contrôle/ajustement effectif et précis d'un moyen de coupure ou d'ouverture monté de manière définitive dans un dispositif de protection différentielle du type évoqué ci-dessus.

A cet effet, l'invention a pour objet un dispositif de protection différentielle selon la revendication 1.

L'invention sera mieux comprise grâce à la description ci-après, qui se rapporte aux modes de réalisations préférés, donnés à titre d'exemples non limitatifs, et expliqués avec référence aux dessins schématiques annexés, dans lesquels :
la figure 4 est une représentation schématique d'un dispositif de protection différentielle selon l'invention, sous la forme d'un dispositif tel que représenté aux figures 1 et 3 et intégrant un moyen d'isolation sélective selon un mode de réalisation de l'invention ;
la figure 5 est une représentation schématique similaire à celle de la figure 4 d'un dispositif selon l'invention soumis à une opération de contrôle/ajustement de la puissance de déclenchement du moyen de coupure ou d'ouverture, et,
la figure 6 est une représentation symbolique d'une variante de réalisation pratique d'un moyen d'isolation sélective faisant partie du dispositif selon l'invention représenté aux figures 4 et 5.

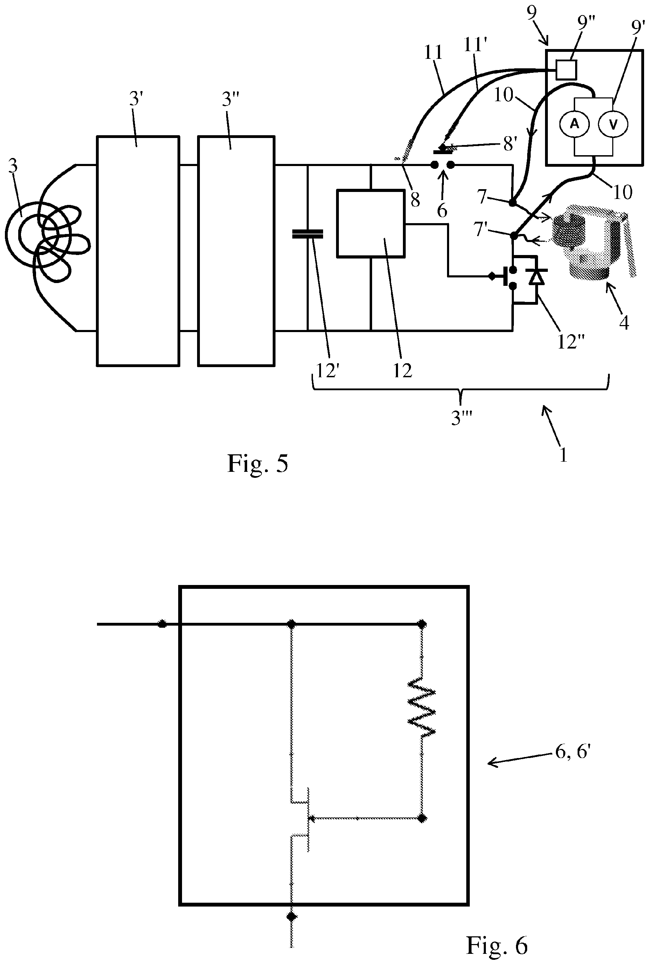

Comme le montrent les figures 4 et 5, l'invention concerne un dispositif de protection différentielle 1 permettant la détection d'un courant de fuite ou de défaut dans une installation électrique alimentée par au moins deux conducteurs de phase 2, 2', 2" d'un réseau ou par au moins un conducteur de phase et un conducteur de neutre d'un réseau.

Ce dispositif 1 comprend principalement, d'une part, un ensemble de moyens fonctionnels 3, 3', 3", 3'" de mesure, de traitement, d'évaluation et de commande aptes et destinés à détecter, par surveillance du courant dans le(s) conducteur(s) primaire(s), un défaut différentiel au niveau du réseau concerné et à générer un signal de commande en cas d'atteinte d'une valeur de courant de défaut située dans une plage de valeurs prédéterminée (par exemple fixée par une norme ou une réglementation analogue) et, d'autre part, un actionneur électromagnétique, un relais ou un moyen de coupure ou d'ouverture analogue 4, présentant notamment une puissance de coupure ou d'ouverture caractéristique.

Ce moyen 4 de coupure ou d'ouverture est relié par un circuit ou des lignes de transmission du signal 5, 5' à la sortie dudit ensemble de moyens fonctionnels 3, 3', 3", 3'" (ou ensemble fonctionnel) et destiné à être déclenché par le signal de commande,
L'ensemble de moyens fonctionnels réalisant la mesure différentielle et commandant le moyen d'ouverture ou de coupure 4 peut notamment comprendre, dans le mode de réalisation du dispositif 1 représenté sur les figures 3 et 4 :
- un tore de mesure 3,
- un étage 3' d'adaptation d'impédance, de filtrage et de protection,
- un étage de redressement 3",
- un étage 3''' de commande relié au moyen 4 de coupure ou d'ouverture.

L'étage de commande 3''' peut, par exemple, comprendre une électronique de commande 12 (contrôlant l'état d'un commutateur 13 déterminant la connexion du moyen 4), une capacité de charge 12' emmagasinant l'énergie pour le déclenchement du moyen 4 et une diode de structure 12" monté en parallèle sur le commutateur 13.

Conformément à l'invention, le dispositif 1 intègre en outre au moins un moyen 6, 6' apte et destiné à isoler électriquement ledit moyen 4 de coupure ou d'ouverture, au moins par rapport audit ensemble fonctionnel 3, 3', 3", 3''', ce de manière sélective.

Ainsi, en prévoyant au moins un moyen 6, 6' apte et destiné à déconnecter le moyen 4 de coupure ou d'ouverture des différents circuits et composants (également 12 et 12') formant l'ensemble de moyens fonctionnels 3, 3', 3", 3''' et à l'isoler de ce dernier, toute possibilité de fuite ou de dérivation de courant peut être supprimée et le courant de mesure délivré par l'appareil ou l'équipement de contrôle 9 correspond bien au courant vu par le moyen 4 de coupure ou d'ouverture.

De plus, en intégrant le(s) moyen(s) d'isolation sélective 6, 6' directement dans le dispositif 1, on évite tout montage électrique complexe lors du contrôle, et toute utilisation de circuit(s) ou de composant(s) extérieur(s) additionnel(s), tout en limitant également la complexité des manipulations à effectuer durant le contrôle et en ne mettant en œuvre qu'un seul équipement ou appareil 9 à cet effet, avantageusement intégré comme composante ou module fonctionnel(le) dédié(e) dans un appareillage de contrôle 9'" plus globale.

Conformément à l'invention, le moyen d'isolation sélective 6 consiste en un composant à changement d'état (par exemple non passant/passant) commandable, monté dans le circuit ou les lignes de transmission électrique(s) 5, 5' reliant ledit ensemble fonctionnel 3, 3', 3", 3'" au moyen de coupure ou d'ouverture 4.

Conformément à l'invention et comme l'illustrent les figures 4 et 5, le moyen 6 d'isolation sélective est monté en série avec le moyen 4 de coupure ou d'ouverture et consiste en un composant normalement passant ou fermé, commandable à l'ouverture, préférentiellement positivement commandable à l'ouverture.

Conformément à l'invention et de manière alternative et non représentée et en vue de parfaire l'isolation électrique du moyen 4, il peut être prévu que le dispositif intègre deux moyens 6 et 6' d'isolation électrique du moyen 4 de coupure ou d'ouverture, montés en série avec ce dernier, respectivement en amont et en aval de ce dernier, et consistant chacun 6, 6' en un composant normalement passant ou fermé, commandable à l'ouverture.

La figure 6 illustre, à titre de réalisation pratique, que le ou chaque moyen 6, 6' peut consister en un composant ou circuit normalement fermé, commandé à l'ouverture et à pertes ou consommation quasi-nulle(s) à l'état passant, tel que par exemple un transistor à effet de champ du type NJFET associé à une résistance adaptée.

Afin de faciliter les manipulations lors de l'opération de contrôle et selon une disposition avantageuse, le circuit ou les lignes de transmission du signal 5, 5', ou le moyen 4 de coupure ou d'ouverture lui-même, comporte(nt) des points ou des bornes 7, 7' de contact ou de branchement situé(e)s respectivement en amont et en aval de l'entrée de commande 4' dudit moyen de coupure ou d'ouverture 4, pour le branchement ou la connexion temporaire de lignes d'alimentation 10, 10' d'un équipement ou appareil 9 de contrôle du fonctionnement, en particulier de vérification de la valeur seuil de la puissance d'ouverture ou de coupure, dudit moyen 4.

Comme le montrent à titre d'exemple de réalisation les figures 4 et 5, ledit au moins un moyen d'isolation sélective 6 est monté en série en amont ou en aval, par rapport aux points ou bornes de contact ou de branchement 7, 7' pour l'équipement ou l'appareil de contrôle 9 amovible.

Selon une autre caractéristique possible facilitant le contrôle, le composant formant le moyen d'isolation sélective 6 est équipé de ou associé à des points ou bornes de contact ou de branchement 8, 8' pour la connexion temporaire de lignes d'alimentation 11, 11' d'un équipement ou appareil 9 de contrôle du moyen d'isolation sélective 6.

Pour ne pas être exposé à l'environnement extérieur, il peut être prévu que les points ou bornes de contact ou de branchement 7, 7', 8, 8' comportent des moyens de protection ou de recouvrement amovibles (non représentés).

L'invention a également pour objet un procédé de contrôle in situ d'un moyen 4 de coupure ou d'ouverture faisant partie d'un dispositif de protection différentielle 1 tel que décrit précédemment, en vue du réglage, de l'ajustement ou de la vérification de la valeur seuil de puissance de déclenchement du moyen 4 précité.

Ce procédé est caractérisé en ce qu'il consiste à fournir un équipement ou appareil de contrôle 9 avec un premier circuit 9' de contrôle/commande du moyen de coupure ou d'ouverture 4 et un second circuit 9" d'alimentation dudit au moins un moyen d'isolation sélective 6, 6', à brancher les différents circuits 9' et 9" de l'équipement de contrôle 9 au niveau de points de contact ou de branchements 7, 7', 8, 8' correspondants du dispositif de protection différentielle 1, puis à effectuer d'éventuels réglages ou ajustements, suivi d'un contrôle, à répéter éventuellement ces opérations jusqu'à obtention d'une valeur de puissance de coupure ou d'ouverture satisfaisante et enfin à débrancher l'appareil ou l'équipement de contrôle 9.

Cet équipement 9 fait avantageusement partie intégrante d'un appareillage 9'" plus important incluant également des circuits de magnétisation/démagnétisation du relais 4, permettant d'effectuer les ajustements, par exemple par approximation, par cycles itératifs successifs.

Plus précisément, à titre d'exemple et en relation avec la figure 5, on réalise d'abord l'isolation du relais 4 (par exemple par application au niveau du composant 6 d'une tension DC fournie par le second circuit d'alimentation 9" intégré à l'appareil 9), puis on alimente ledit relais 4 avec un courant de mesure fourni par une source faisant partie du circuit de contrôle 9', l'analyse de ce courant permettant de déterminer la puissance de déclenchement (coupure/ouverture) dudit relais 4. En fonction de la valeur déterminée lors de ce contrôle, un cycle d'ajustement itératif du relais 4 est effectué (magnétisation/démagnétisation/contrôle) jusqu'à ce que ladite valeur de puissance soit située dans la plage requise ou corresponde sensiblement à une valeur autorisée et/ou optimale, garantissant un fonctionnement adéquat du relais 4 et du dispositif 1 tout au long de leur durée de vie.

L'invention permet également de s'accommoder d'une plage réduite de réserve en puissance maximale déclenchable, du fait d'une plus grande précision dans l'ajustement de la puissance du relais. Cette amélioration technique permet également d'aboutir à un dimensionnement au plus juste des composants et des valeurs critiques et à une réduction des temps de déclenchement.

L'invention divulguée ci-dessus fournit ainsi une solution optimisée, ce dans un contexte de produit différentiel à organe de coupure/ouverture du type relais et mettant en œuvre une technologie à assistance électronique, qui consiste à maîtriser/réduire les variabilités du relais 4 lors du processus de fabrication du produit.

Pour réduire les variabilités du relais lors du process de fabrication, le principe du pré-ajustage actuel est remplacé par un ajustage/contrôle du relais 4 avant ou pendant le contrôle final du produit différentiel qui l'intègre. Un tel procédé permet d'éviter les multiples sources possibles de la dérive des caractéristiques du relais 4 qui peuvent se produire entre le pré-ajustage dudit relais et le placement de ce dernier dans le produit avant le contrôle final, comme lors de l'utilisation de la technique de pré-ajustage décrite en introduction.

La suppression, grâce à l'invention, des sources de variabilités permet aux concepteurs d'optimiser le dimensionnement du niveau d'énergie à emmagasiner, ce qui autorise un raccourcissement des temps de déclenchement et au final une mise en œuvre de moyens de stockage plus réduits (capacité), une réduction du volume de tore et ainsi de son coût et/ou l'amélioration des performances.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention définie par les revendications.

## Revendications

1. Dispositif de protection différentielle permettant la détection d'un courant de fuite ou de défaut dans une installation électrique alimentée par au moins deux conducteurs de phase d'un réseau ou par au moins un conducteur de phase et un conducteur de neutre d'un réseau,
ledit dispositif (1) comprenant principalement, d'une part, un ensemble de moyens fonctionnels (3, 3', 3", 3''') de mesure, de traitement, d'évaluation et de commande aptes et destinés à détecter, par surveillance du courant dans les conducteurs primaires, un défaut différentiel au niveau du réseau concerné et à générer un signal de commande lorsque la valeur du courant de défaut est située dans une plage prédéterminée et, d'autre part, un moyen de coupure ou d'ouverture (4), présentant notamment une puissance de coupure ou d'ouverture caractéristique,
ledit moyen (4) de coupure ou d'ouverture étant relié par un circuit ou des lignes de transmission du signal (5, 5') à la sortie dudit ensemble fonctionnel (3, 3', 3", 3''') et destiné à être déclenché par le signal de commande,
le dispositif (1) intégrant en outre au moins un moyen (6, 6') d'isolation sélective apte et destiné à isoler électriquement ledit moyen (4) de coupure ou d'ouverture, au moins par rapport audit ensemble fonctionnel (3, 3', 3", 3'''), ce de manière sélective,
le moyen (6) d'isolation sélective consiste en un composant à changement d'état commandable, monté dans le circuit ou les lignes de transmission électriques (5, 5') reliant ledit ensemble fonctionnel (3, 3', 3", 3''') au moyen de coupure ou d'ouverture (4), le dispositif est **caractérisé en ce que** le moyen (6) d'isolation sélective est monté en série avec le moyen (4) de coupure ou d'ouverture et consiste en un composant normalement passant ou fermé, commandable à l'ouverture ou
**en ce qu'**il intègre deux moyens (6 et 6') d'isolation électrique du moyen (4) de coupure ou d'ouverture, montés en série avec ce dernier, respectivement en amont et en aval de ce dernier, et consistant chacun (6, 6') en un composant normalement passant ou fermé, commandable à l'ouverture.

2. Dispositif selon la revendication 1 , **caractérisé en ce que** le ou chaque moyen d'isolation sélective (6, 6') consiste en un composant ou circuit normalement fermé, commandé à l'ouverture et à pertes quasi- nulles ou consommation quasi-nulle à l'état passant, tel que par exemple un transistor à effet de champ du type NJFET associé à une résistance adaptée.

3. Dispositif selon l'une quelconque des revendications 1 à 2, **caractérisé en ce que** le circuit ou les lignes de transmission du signal (5, 5') ou le moyen (4) de coupure ou d'ouverture comportent des points ou des bornes (7, 7') de contact ou de branchement situés respectivement en amont et en aval de l'entrée de commande (4') dudit moyen de coupure ou d'ouverture (4), pour le branchement ou la connexion temporaire de lignes d'alimentation (10, 10') d'un équipement ou appareil (9) de contrôle du fonctionnement, en particulier de vérification de la valeur de la puissance d'ouverture ou de coupure (4), dudit moyen.

4. Dispositif selon la revendication 3, **caractérisé en ce que** ledit au moins un moyen d'isolation sélective (6) est monté en série en amont ou en aval par rapport aux points ou bornes de contact ou de branchement (7, 7') pour l'équipement ou l'appareil de contrôle (9) amovible.

5. Dispositif selon l'une quelconque des revendications 1 à 3, **caractérisé en ce que** le composant formant le moyen d'isolation sélective (6) est équipé de ou associé à des points ou bornes de contact ou de branchement (8, 8') pour la connexion temporaire de lignes d'alimentation (11, 11') d'un équipement ou appareil (9) de contrôle du moyen d'isolation sélective (6).

6. Dispositif selon les revendications 3 et 5, **caractérisé en ce que** les points ou bornes de contact ou de branchement (7, 7', 8, 8') comportent des moyens de protection ou de recouvrement amovibles.

7. Procédé de contrôle in situ d'un moyen de coupure ou d'ouverture faisant partie d'un dispositif de protection différentielle selon l'une quelconque des revendications 3 à 6, en vue du réglage, de l'ajustement ou de la vérification de la valeur seuil de puissance de déclenchement du moyen précité,
procédé **caractérisé en ce qu'**il consiste à fournir un équipement ou appareil de contrôle (9) avec un premier circuit (9') de contrôle du moyen de coupure ou d'ouverture (4) et un second circuit (9") d'alimentation dudit au moins un moyen d'isolation sélective (6, 6'), à brancher les différents circuits (9' et 9") dudit appareil de contrôle (9) au niveau de points de contact ou de branchements (7, 7', 8, 8') correspondants du dispositif (1) de protection différentielle, puis à effectuer d'éventuels réglages ou ajustements, suivi d'un contrôle, à répéter éventuellement ces opérations jusqu'à obtention d'une valeur de puissance de coupure ou d'ouverture satisfaisante, et enfin à débrancher l'appareil ou l'équipement de contrôle (9).

## Patentansprüche

1. Differentialschutzvorrichtung, die es ermöglicht, einen Leck- oder Fehlerstrom in einer elektrischen Anlage zu erkennen, die von mindestens zwei Phasenleitern eines Netzes oder von mindestens einem Phasenleiter und einem Nulleiter eines Netzes gespeist wird, wobei die Vorrichtung (1) prinzipiell einerseits eine Funktionsmittelbaugruppe (3, 3', 3", 3''') zur Messung, Verarbeitung, Auswertung und Steuerung umfasst, die durch Überwachung des Stroms in den Primärleitern einen Differenzfehler auf der Ebene des betreffenden Netzes erfassen können und dazu bestimmt sind, ein Steuersignal zu erzeugen, wenn der Wert des Fehlerstroms in einem vorbestimmten Bereich liegt, und andererseits ein Abschalt- oder Öffnungsmittel (4), das insbesondere eine charakteristische Abschalt- oder Öffnungsleistung umfasst, wobei das Abschalt- oder Öffnungsmittel (4) über eine Schaltung oder Signalübertragungsleitungen (5, 5') mit dem Ausgang der Funktionsbaugruppe (3, 3', 3", 3''') verbunden und dazu bestimmt ist, durch das Steuersignal ausgelöst zu werden,
wobei die Vorrichtung (1) außerdem mindestens ein Mittel zur selektiven Isolierung (6, 6') integriert, das geeignet und dazu bestimmt ist, die genannten Abschalt- oder Öffnungsmittel (4) zumindest in Bezug auf die genannte Funktionsbaugruppe (3, 3', 3", 3''') auf selektive Weise elektrisch zu isolieren,
wobei das Mittel zur selektiven Isolierung (6) aus einem steuerbaren Zustandsänderungsbauteil besteht, das in der Schaltung oder den elektrischen Übertragungsleitungen (5, 5') montiert ist, die die Funktionsbaugruppe (3, 3', 3", 3''') mit dem Abschalt- oder Öffnungsmittel (4) verbindet,
wobei die Vorrichtung **dadurch gekennzeichnet ist, dass** das Mittel zur selektiven Isolierung (6) in Reihe mit dem Abschalt- oder Öffnungsmittel (4) geschaltet ist und aus einem normal leitenden oder geschlossenen Bauteil besteht, das beim Öffnen steuerbar ist, oder
dass sie zwei Mittel (6 und 6') zur elektrischen Isolierung der Abschalt- oder Öffnungsmittel (4) umfasst, die in Reihe mit dieser vor bzw. hinter dieser montiert sind und jeweils aus einem normal leitenden oder geschlossenen, beim Öffnen steuerbaren Bauteil (6, 6') bestehen.

2. Vorrichtung nach Anspruch 1,
**dadurch gekennzeichnet, dass** das oder jedes Mittel zur selektiven Isolierung (6, 6') aus einem/einer normalerweise geschlossenen Bauteil oder Schaltung besteht, der beim Öffnen gesteuert wird und im leitenden Zustand nahezu keine Verluste oder nahezu keinen Verbrauch aufweist, wie z.B. ein Feldeffekttransistor vom NJFET-Typ in Verbindung mit einem geeigneten Widerstand.

3. Vorrichtung nach einem der Ansprüche 1 bis 2,
**dadurch gekennzeichnet, dass** die Schaltung oder die Signalübertragungsleitungen (5, 5') oder die Abschalt- oder Öffnungsmittel (4) Kontakt- oder Verbindungspunkte oder - klemmen (7, 7') aufweisen, die vor bzw. hinter dem Steuereingang (4') der Abschalt- oder Öffnungsmittel (4) angeordnet sind, für den Anschluss oder vorübergehenden Anschluss von Versorgungsleitungen (10, 10') einer Einrichtung oder eines Geräts (9) zur Steuerung des Betriebs, insbesondere zur Kontrolle des Werts der Öffnungs- oder Abschaltleistung (4), des genannten Mittels.

4. Vorrichtung nach Anspruch 3,
**dadurch gekennzeichnet, dass** das genannte mindestens eine Mittel zur selektiven Isolierung (6) in Bezug auf die Kontakt- oder Anschlusspunkte oder -klemmen (7, 7') für die abnehmbare Ausrüstung oder der Steuereinrichtung (9) stromaufwärts oder stromabwärts in Reihe geschaltet ist.

5. Vorrichtung nach einem der Ansprüche 1 bis 3,
**dadurch gekennzeichnet, dass** das Mittel zur selektiven Isolierung (6) bildende Bauteil mit Kontakt- oder Anschlusspunkten oder -klemmen (8, 8') für den zeitweiligen Anschluss von Versorgungsleitungen (11, 11') Einrichtung oder eines Geräts (9) zur Steuerung des Mittels zur selektiven Isolierung (6) ausgestattet oder diesen zugeordnet ist.

6. Vorrichtung nach den Ansprüchen 3 und 5,
**dadurch gekennzeichnet, dass** die Kontakt- oder Anschlusspunkte oder -klemmen (7, 7', 8, 8') abnehmbare Schutz- oder Abdeckmittel aufweisen.

7. Verfahren zur in-situ-Steuerung eines Abschalt- oder Öffnungsmittels, welches Teil einer Differentialschutzvorrichtung nach einem der Ansprüche 3 bis 6 ist,
zum Zweck der Einstellung, Justierung oder Überprüfung des Auslöseleistungs-Schwellwertes der oben genannten Mittels,
wobei das Verfahren, **dadurch gekennzeichnet ist, dass** es darin besteht, eine Einrichtung oder ein Gerät (9) zur Steuerung (9) mit einer ersten Schaltung (9') zur Steuerung der Abschalt- oder Öffnungsmittel (4) und einer zweiten Schaltung (9") zur Versorgung des mindestens einen Mittels zur selektiven Isolierung (6, 6') vorzusehen, die verschiedenen Schaltungen (9' und 9") der genannten Steuereinrichtung (9) mit den entsprechenden Kontaktpunkten oder Anschlüssen (7, 7', 8, 8') der Differentialschutzvorrichtung (1) zu verbinden,
dann etwaige Einstellungen oder Justierungen vorzunehmen, gefolgt von einer Kontrolle, diese Vorgänge gegebenenfalls zu wiederholen, bis ein zufriedenstellender Wert für die Abschalt- oder Öffnungsleistung erreicht ist,
und schließlich das Gerät oder die Steuereinrichtung (9) abzuschalten.

## Claims

1. Differential protection device enabling the detection of a leakage current or fault in an electrical installation powered by at least two phase conductors of a network or by at least one phase conductor and a neutral conductor of a network,
said device (1) comprising mainly, on the one hand a set of functional means (3, 3', 3", 3") for measurement, processing, evaluation and control which are suitable for and designed to detect, by monitoring the current in the primary conductors, a differential fault in the relevant network and generate a control signal when the value of the faulty current is within a predetermined range and, on the other hand a cut-off or opening means (4), in particular having a characteristic cut-off or opening power,
said cut-off or opening means (4) being connected by a circuit or signal transmission lines (5, 5 ') to the output of said functional assembly (3, 3', 3", 3''') and designed to be triggered by the control signal,
the device (1) further integrating at least one means (6, 6') of selective isolation which is adapted and intended to electrically isolate said cut-off or opening means (4), at least with respect to said functional assembly (3, 3', 3", 3''') in a selective manner,
the means (6) of selective isolation consists of a controllable state change component, mounted in the circuit or the electric transmission lines (5, 5') connecting said functional means (3, 3', 3", 3''') to the cut-off or opening means (4),
the device being **characterised in that** the means (6) for selective isolation is connected in series to the cut-off or opening means (4) and consists of a normally open or closed component, controllable at the opening or
**in that** it incorporates two means (6 and 6') for electrical isolation of the cut-off or opening means (4), connected in series with the latter, respectively upstream and downstream of the latter, and each (6, 6') consisting of a normally open or closed component, controllable at the opening.

2. Device according to claim 1, **characterised in that** the or each means (6, 6') of selective isolation consists of a normally closed component or circuit, controlled at the opening and at quasi-zero losses or quasi-zero consumption in the passing state, such as for example a field effect transistor NJFET type associated with a suitable resistor.

3. Device according to any of claims 1 to 2, **characterised in that** the circuit or the signal transmission lines (5, 5') or the cut-off or opening means (4) comprise contact or connection points or terminals (7, 7') located respectively upstream and downstream of the control input (4') of said cut-off or opening means (4), for the connection or temporary connection of supply lines (10, 10') of a piece of equipment or apparatus (9) for controlling the operation, in particular for checking the value of the opening or cut-off power (4) of said means.

4. Device according to claim 3, **characterised in that** said at least one selective isolation means (6) is connected in series upstream or downstream with respect to the contact or connection points or terminals (7, 7') for the removable control equipment or apparatus (9).

5. Device according to any of claims 1 to 3, **characterised in that** the component forming the selective isolation means (6) is equipped with or associated with contact or connection points or terminals (8, 8') for the temporary connection of supply lines (11, 11') of a piece of equipment or apparatus (9) for controlling the selective isolation means (6).

6. Device according to claims 3 and 5, **characterised in that** the contact or connection points or terminals (7, 7', 8, 8') comprise removable protection or covering means.

7. Method for the in situ control of a cut-off or opening means forming part of a differential protection device according to any of claims 3 to 6, for setting, adjusting or verifying the threshold value of the triggering power of the aforementioned means, the method being **characterised in that** it consists of providing a piece of control equipment or apparatus (9) with a first circuit (9') for controlling the cut-off or opening means (4) and a second circuit (9") for supplying said at least one means (6, 6') of selective isolation, to connect the various circuits (9' and 9") of said control apparatus (9) to corresponding contact or connections points (7, 7', 8, 8') of the differential protection device (1), then to make possible settings or adjustments, followed by a check, to possibly repeat these operations until a satisfactory cut-off or opening power value is obtained and finally disconnecting the control apparatus or equipment (9).
